(19) Europäisches Patentamt
European Patent Office
Office européen des brevets

(11) Veröffentlichungsnummer: **0 374 666 B1**

(12) **EUROPÄISCHE PATENTSCHRIFT**

(45) Veröffentlichungstag der Patentschrift: **26.01.94**

(51) Int. Cl.5: **C08F 210/02**, C08F 218/04, //(C08F210/02,218:04), (C08F218/04,210:02)

(21) Anmeldenummer: **89122787.8**

(22) Anmeldetag: **09.12.89**

Die Akte enthält technische Angaben, die nach dem Eingang der Anmeldung eingereicht wurden und die nicht in dieser Patentschrift enthalten sind.

(54) **Kontinuierliches Verfahren zur Herstellung von Ethylen/Vinylester-Terpolymerisaten.**

(30) Priorität: **23.12.88 DE 3843563**
**30.06.89 DE 3921479**

(43) Veröffentlichungstag der Anmeldung:
**27.06.90 Patentblatt 90/26**

(45) Bekanntmachung des Hinweises auf die Patenterteilung:
**26.01.94 Patentblatt 94/04**

(84) Benannte Vertragsstaaten:
**BE DE FR GB IT**

(56) Entgegenhaltungen:
**EP-A- 0 373 313**
**EP-A- 0 374 664**
**DE-A- 3 228 169**
**DE-A- 3 323 531**
**US-A- 3 325 460**

(73) Patentinhaber: **BAYER AG**

**D-51368 Leverkusen(DE)**

(72) Erfinder: **Casper, Rudolf, Prof. Dr.**
**St. Ingberter Strasse 3**
**D-5090 Leverkusen(DE)**
Erfinder: **Baade, Wolfgang, Dr.**
**Kölner Strasse 122**
**D-4047 Dormagen(DE)**
Erfinder: **Obrecht, Werner, Dr.**
**Holderbergerstrasse 108**
**D-4130 Moers 2(DE)**
Erfinder: **Ohm, Christian, Dr.**
**Walter-Flex-Strasse 32**
**D-5090 Leverkusen(DE)**
Erfinder: **Sylvester, Gerd, Dr.**
**An der Steinruetsch 5a**
**D-5090 Leverkusen(DE)**
Erfinder: **Meurer, Kurt-Peter, Dr.**
**Am Krahfeld 1**
**D-5330 Köningswinter 21(DE)**

**EP 0 374 666 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein kontinuierliches Verfahren zur Herstellung von Ethylen/Vinylester-Terpolymerisaten mit verbesserten Eigenschaften durch Lösungspolymerisation, neue Ethylen/Vinylester-Terpolymerisate und ihre Verwendung zur Herstellung von Vulkanisaten. Unter "Terpolymerisaten" im Sinne der Erfindung werden alle Copolymerisate verstanden, die copolymerisierte Einheiten von mindestens drei verschiedenen Monomeren enthalten; dementsprechend umfaßt dieser Ausdruck also auch Polymerisate aus vier und mehr Monomeren.

Ethylen und Vinylester wie Vinylacetat lassen sich bekanntlich in unterschiedlichen Mengenverhältnisssen bei statistischer Verteilung der copolymerisierten Monomereinheiten radikalisch polymerisieren. Die Copolymerisation kann grundsätzlich nach folgenden drei Verfahren durchgeführt werden:

1. Emulsionspolymerisation,
2. Lösungspolymerisation und
3. Hochdruckmassepolymerisation.

Ethylen/Vinylester-Copolymerisate mit niedrigem Vinylestergehalt können durch Hochdruckmassepolymerisation wirtschaftlich hergestellt werden (H. Bucka, R. Nitzsche, H. Onderka, Plaste und Kautschuk 30, 6, S. 302-305 (1983)). Die Polymerisation erfolgt im allgemeinen bei Drucken von 1000 bis 3000 bar und bei Temperaturen von 150 bis 280 °C. Nach diesem Verfahren hergestellte Produkte mit Vinylestergehalten bis 30 Gew.-% können als Schmelzklebstoffe und als Fließverbesserer für Rohöle und Mitteldestillate sowie für die Kabelummantelung verwendet werden.

Zur Herstellung von Ethylen/Vinylester-Copolymerisaten mit mittleren bis hohen Vinylester-Gehalten eignet sich das Hochdruckverfahren nicht, da es schwierig ist, bei den dort notwendigen Polymerisationstemperaturen Copolymerisate mit hohem Molekulargewicht und hoher Mooney-Viskosität zu erhalten.

Ethylen/Vinylester-Copolymerisate mit Vinylester-Gehalten über 70 Gew.-% werden überwiegend durch Emulsionspolymerisation hergestellt. Übliche Bedingungen sind Drucke von 30 bis 500 bar und Temperaturen von 20 bis 100 °C. Die Eigenschaften dieser Ethylen/Vinylester-Copolymerisate werden durch nicht vollständig abtrennbare Emulgatorreste bestimmt und machen die Copolymerisate für eine Reihe von Anwendungen unbrauchbar.

In der EP-A-0 373 313 wird eine solche Emulsionspolymerisation für die Herstellung von Ethylen/Vinylacetat-Copolymerisate mit einem hohen Anteil an Vinylacetat beschrieben.

In der EP-A-0 374 664 wird eine Hochdruckmassepolymerisation zur Herstellung von Ethylen/Vinylacetat-Copolymerisaten beschrieben, welche ein spezielles Terpolymeres liefert mit einem verhältnismäßig hohen Molekulargewicht.

Ethylen/Vinylester-Copolymerisate mit einem Vinylester-Gehalt von mindestens 30 Gew.-% können auch nach einem Lösungspolymerisationsverfahren bei mittleren Drucken hergestellt werden. Als Lösungsmittel verwendet man beispielsweise tert.-Butanol oder Gemische aus tert.-Butanol, Methanol und Kohlenwasserstoffen, in denen die Polymerisate auch während des Polymerisationsprozesses in Lösung bleiben (DE-B-11 26 613, 11 26 614 und 14 95 767, DE-A-33 23 531, GB-A-807 112 und 843 974, FR-A-1 189 387, 1 225 704 und 1 238 589, US-A-2 396 785 und 2 947 735).

Aus der US-A- 4 485 225 ist ein kontinuierliches Lösungspolymerisationsverfahren zur Herstellung von Ethylen/Vinylacetat-Copolymerisaten bekannt, wobei auch ein drittes Monomer mitverwendet werden kann, das vorzugsweise in Mengen von 0 bis 10 Mol-%, bezogen auf Vinylacetat (Sp. 3, Z.44) eingesetzt wird. Der Lösungsmittelgehalt liegt vorzugsweise unter 20 Gew.-% (Sp.2, Z. 23/24), die Drucke übersteigen laut den Beispielen 56 bar (Beispiel 2) nicht, und gemäß den Beispielen wird in nur einem einzigen Reaktionskessel gearbeitet.

In den Beispielen werden weder die erreichten Molekulargewichte noch die Viskositäten der erhaltenen Polymerisate angegeben, und gelfreie Produkte werden offenbar nur bei Umsätzen erzielt, die 55 % (bezogen auf Vinylacetat) nicht überschreiten. Demnach bietet die US-A-4 485 225 kein wirtschaftliches Verfahren zur Herstellung von hochmolekularen und dennoch gelfreien Ethylen-Terpolymerisaten.

Die Lösungsmittel-, Kraftstoff- und Ölbeständigkeit von Ethylen/Vinylester-Copolymerisaten und ihren Vulkanisaten wird nicht immer allen Anforderungen gerecht. Die Copolymerisation geeigneter Termonomerer hat dieses Problem bislang noch nicht lösen können, weil man eine Verbesserung der Beständigkeit gegen organische Lösungsmittel, Kraftfahrzeugkraftstoff und Schmieröle in der Regel nur auf Kosten der Tieftemperaturflexibilität erreicht. Demnach bestand Bedarf an einem wirtschaftlichen Verfahren zur kontinuierlichen Herstellung von hochmolekularen gelfreien Ethylen/Vinylester-Terpolymerisaten mit hoher Beständigkeit gegen organische Lösungsmittel, Kraftstoff und Öl bei gleichzeitig guter Flexibilität bis hinab zu tiefen Temperaturen.

Überraschenderweise wurde gefunden, daß durch ein in einer Kaskade kontinuierlich durchgeführtes Lösungspolymerisationsverfahren mit definierten Parametern (Lösungsmittelgehalt, Druck, Temperaturführung, Umsatz) hochmolekulare, gelfreie Ethylen-Terpolymerisate zugänglich sind, die eine hohe Beständigkeit gegen organische Lösungsmittel, Kraftstoffe und Öle mit einer hohen Flexibilität auch bei tiefen Temperaturen in sich vereinen, und zwar sowohl in unvulkanisiertem als auch in vulkanisiertem Zustand.

Gegenstand der Erfindung ist daher ein kontinuierliches Verfahren zur Herstellung von Ethylen-Terpolymerisaten mit einem Gelgehalt von nicht mehr als 0,2 Gew.-%, bezogen auf das Terpolymerisat, und mit einem als Gewichtsmittel bestimmten Molekulargewicht $\overline{M}_w$ von 50.000 bis 1.500.000, vorzugsweise 100.000 bis 1.500.000, ganz besonders bevorzugt von 200.000 bis 500.000, enthaltend

a) 1 bis 59 Gew.-% copolymerisiertes Ethylen,

b) 40 bis (99-c) Gew.-% copolymerisierte Einheiten mindestens eines Vinylesters der Formel

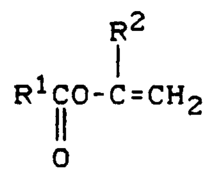

worin

$R^1$ $C_1$-$C_6$-Alkyl und

$R^2$ Wasserstoff; $C_1$-$C_6$-Alkyl, das durch -CN, -SCN oder Halogen (Fluor, Chlor, Brom) substituiert sein kann,

bedeuten, und

c) 1 bis 59 Gew.-% copolymerisierte Einheiten mindestens eines Monomeren der Formeln

CO,

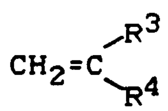 und/oder 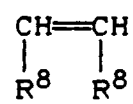

worin

$R^3$ Wasserstoff, $C_1$-$C_6$-Alkyl, -CN oder Halogen (Fluor, Chlor, Brom), $-COOR^5$,

$R^4$ -COOH, $-CONH_2$, $-COOCH_2OH$,

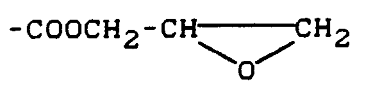

$-COOCH_2CH=CH_2$, $-COOCH_2CH_2Cl$,

$-CONHCH=CH_2$, $-COOCO-C(CH_3)=CH_2$,

$-COOR^5$, -CN oder Halogen (Fluor, Chlor, Brom),

$R^5$ $[R^6O]_n R^7$,

$R^6$ $C_1$-$C_6$-, vorzugsweise $C_2$- und/oder $C_3$-Alkylen,

$R^7$ Wasserstoff, $C_1$-$C_6$-Alkyl, -CN, $-OR^9$, $-COR^9$ oder Halogen (Fluor, Chlor, Brom),

$R^8$ $-CO_2R^5$, -CN oder Halogen (Fluor, Chlor, Brom) oder beide $R^8$-Substituenten zusammen -CO-O-CO-, -CO-NH-CO- oder

$> (CO)_2-N-C_1-C_6$-Alkyl,

$R^9$ Wasserstoff oder $C_1$-$C_6$-Alkyl und n eine ganze Zahl von 1 bis 10 bedeuten,

wobei sich die Prozentangaben jeweils auf die Summe der Komponenten (a + b + c) beziehen, in Lösung, dadurch gekennzeichnet, daß man die Reaktion

- in einer Kaskade aus 3 bis 10 - vorzugsweise 5 - Reaktoren,
- in einem polaren organischen Lösungsmittel bei einer Lösungsmittelkonzentration, bezogen auf die Summe (Monomere + Lösungsmittel), von über 20 bis 75 Gew.-%,
- unter Drucken von 100 bis 1.000 bar,
- bei Temperaturen von 30 bis 150 °C, vorzugsweise von 50 bis 90 °C,

- in Gegenwart von 0,02 bis 1,5 Gew.-%, bezogen auf eingesetzte Monomere, Polymerisationsinitiator,
- bis zu einem Umsatz, bezogen auf Vinylester b), von 40 bis 90 Gew.-%, vorzugsweise 60 bis 80 Gew.-% durchführt.

Bevorzugte Vinylester b) sind beispielsweise Vinylpropionat und Vinylbutyrat, vorzugsweise aber Vinylacetat.

Bevorzugte Termonomere c) umfassen beispielsweise Acrylsäure, Acrylamid, Acrylsäurehydroxymethylester, Acrylsäureglycidylester, Acrylsäureallylester, Acrylsäure-ß-chlorethylester, N-Vinyl-acrylsäureamid und die entsprechenden Methacrylsäurederivate. Die Termonomeren c) werden vorzugsweise in Mengen über 10, vorzugsweise über 25, insbesondere über 50 Mol %, bezogen auf Vinylester b), eingesetzt.

Außerdem wurde gefunden, daß sich durch Copolymerisation geringer Mengen von d) Verbindungen mit mindestens zwei Acryloyl- bzw. Methacryloylgruppen pro Molekül Terpolymerisate erhalten lassen, die sich zu Vulkanisaten mit erhöhten Festigkeiten verarbeiten lassen.

Eine besondere Ausführungsform des erfindungsgemäßen Verfahrens ist also dadurch gekennzeichnet, daß man die Polymerisation in Gegenwart von d) 50 ppm bis 1 Gew.-%, vorzugsweise 200 ppm bis 1 Gew.-%, bezogen auf eingesetzte polymerisierbare Monomere, (Meth-)Acryloylverbindung mit mindestens 2 Acryloyl- oder Methacryloylgruppen pro Molekül durchführt.

Für diese besondere Ausführungsform bevorzugte (Meth-)Acryloylverbindungen umfassen Verbindungen mit einem Molekulargewicht von 126 bis 1000, vorzugsweise von 126 bis 500, beispielsweise Acrylsäureanhydrid, Methacrylsäureanhydrid, die Acrylate und Methacrylate von mehrwertigen, insbesondere von 2-und 3-wertigen, aliphatischen, cycloaliphatischen, araliphatischen und aromatischen Alkoholen mit 2 bis 24 C-Atomen pro Molekül, also z.B. Acrylate und Methacrylate von Ethylenglykol, Propandiol-1.2 und -1.3, Butandiol-1.2, -1.3, -2.3 und -1.4, Neopentylglykol, Hexandiolen, insbesondere Hexandiol-1.6, Cyclohexandiol-1.4, 1.4-Bis(hydroxymethyl)cyclohexan, Hydrochinon, Resorcin, Bisphenol-A, oxethyliertem Bisphenol-A, Hydrochinon-di(ß-hydroxyethyl)ether; von Glycerin, Trimethylolethan und -propan, Phloroglucin.

Bevorzugte (Meth-)Acryloylverbindungen sind auch Acrylate und Methacrylate von Polyetherpolyolen, vorzugsweise von Polyethylen- und Polypropylenglykolen mit 1 bis 20, vorzugsweise 1 bis 12, Ether-Sauerstoffatomen pro Molekül; insbesondere von Di- und Triethylenglykol und von Di-und Tripropylenglykol.

Den Gelgehalt der Ethylen-Terpolymerisate kann man durch 24-stündige Extraktion mit Dichlormethan im Soxhlet-Extraktor bestimmen, wobei ein "gelfreies" Produkt im Sinne der Erfindung nicht mehr als 0,2 Gew.-% unlöslichen Rückstand, bezogen auf das Terpolymerisat, enthalten darf.

Die (Einzel-)Molekulargewichte werden durch Gelpermeationschromatographie, gekoppelt mit Viskosimetrie und Trübungstitration, wie folgt ermittelt:

Die Proben werden mit einer Konzentration von 10 g/l in $CH_2Cl_2$ angesetzt und nach 24 Stunden bei Raumtemperatur ultrazentrifugiert (1 Stunde bei 20.000 $min^{-1}$). Das abgetrennte Sediment wird bei 60°C im Vakuum getrocknet und ausgewogen ($y_{UZ}$). Von der Sollösung wird zusätzlich mit einem automatisierten Ubbelohde-Kappilarviskosimeter der Staudinger-Index ($[\eta]_{Sol}$) in $CH_2Cl_2$ bei 25°C bestimmt.

Die gelchromatographische Trennung erfolgt an 8 hintereinander geschalteten Styragel®-Säulen (Porengröße $10^2/10^2/10^3/10^3/10^4/10^4/10^5/10^6$ nm; Gesamtlänge 976 cm). 2,0 ml der mit $CH_2Cl_2$ auf c = 2 g/l verdünnten Sollösung werden nach Filtration durch einen Membranfilter mit einem Porendurchmesser von 1,2 µm aufgegeben und mit $CH_2Cl_2$ (Flußgeschwindigkeit 0,5 ml/min) eluiert. Als konzentrationsproportionaler Detektor dient ein Refraktometer. Zum spezifischen Nachweis der Acetatbande wird ein IR-Filterphotometer bei $\lambda$ = 5,76 nm ($\lambda$ = 1,736 nm) eingesetzt.

Gekoppelt an die gelchromatographische Trennung wird mit jeweils 5 ml des Eluates - entsprechend einem count im Gelchromatogramm - automatisch eine Viskositätsmessung in einem modifizierten Ubbelohde-Viskosimeter und danach eine Trübungstitration durchgeführt. Für die Titration wird das Eluat in eine Küvette geleitet, die sich in einem geschwärzten Metallgehäuse befindet, und mit Hilfe einer Schlauchpumpe das Fällungsmittel (Methanol) kontinuierlich mit 2 ml/min. zugegeben. Insgesamt werden 15 ml Fällungsmittel zugegeben. Ein Rührer (8.000 U/min) sorgt für eine schnelle Durchmischung der Komponenten. Die Küvette wird mit einer Lichtemissionsdiode beleuchtet. Die Streulichtintensität des Lösungs-/Fällungsmittel-Gemisches wird mit einer optischen Einrichtung unter einem Winkel von 20°C zum Primärstrahl gemessen und in Abhängigkeit der zudosierten Fällungsmittelmenge registriert.

Während einer gelchromatographischen Untersuchung fallen 75 derartige Eluatfraktionen an, von denen ca. 20 bis 30 die aufgetrennte Probe enthalten. Die Berechnung der Molekulargewichtsverteilung aus den refraktometrischen und viskosimetrischen Daten erfolgt anhand bekannter Konstanten mit Hilfe einer universellen Eichkurve nach der Methode von Benoit (H. Benoit, P. Rempp, Z. Grubisic, J. Polym. Sci., Polym. Lett. Ed. 3, 77 (1965); Polystyrol-Standards im Molekulargewichtsbereich von 600 bis 10 000 000; Aufstellung der Eichkurve gemäß der Gleichung

log ([η]•M) = f ($V_E$)

[η] = Staudinger-Index, bestimmt in Methylenchlorid bei 25°C in einem Ubbelohde-Kappilarviskosimeter

M = Molekulargewicht

$V_E$ = Elutionsvolumen in 5 ml-Einheiten).

Für das erfindungsgemäße Verfahren bevorzugte polare organische Lösungsmittel sind Lösungsmittel, die zu mindestens 50 Gew.-% aus tert.-Butanol bestehen. Bevorzugtes Lösungsmittel ist tert. Butanol selbst.

Für das erfindungsgemäße Verfahren geeignete radikalbildende Polymerisationsinitiatoren sind beispielsweise organische Peroxide, Perester und Azoverbindungen, wie z.B. Benzoylperoxid, Lauroylperoxid, tert.-Butylperpivalat, tert.-Amylperpivalat, Cyclohexylperoxydicarbonat, Azobisisobutyronitril und Azobisisovaleriansäurederivate.

Weiterer Gegenstand der Erfindung sind Ethylen-Terpolymerisate mit einem Gelgehalt von nicht mehr als 0,2 Gew.-%, bezogen auf das Terpolymerisat, und mit einem als Gewichtsmittel bestimmten Molekulargewicht $\overline{M}_w$ von 50.000 bis 1.500.000, bevorzugt von 100.000 bis 1.500.000, besonders bevorzugt 200.000 bis 500.000, enthaltend

a) 1 bis 59 Gew.-% copolymerisiertes Ethylen,

b) 40 bis (99-c) Gew.-% copolymerisierte Einheiten mindestens eines Vinylesters der Formel

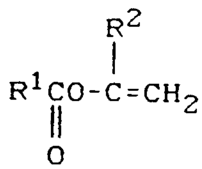

und

c) 1 bis 59 Gew.-% copolymerisierte Einheiten mindestens eines Monomeren der Formeln

CO,

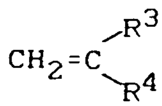 und/oder 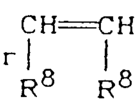

wobei die Substituenten $R^1$ bis $R^9$ die oben angegebene Bedeutung besitzen, erhältlich durch das erfindungsgemäße Verfahren.

Weiterer Gegenstand der Erfindung sind diejenigen der obigen Terpolymerisate, die einen Gehalt von 50 ppm bis 1 Gew.-% an copolymerisierter (Meth-)Acryloylverbindung mit mindestens 2 Acryloyl- oder Methacryloylgruppen pro Molekül besitzen.

Die erfindungsgemäßen Terpolymerisate zeichnen sich u.a. durch hohe Zugfestigkeit, geringe Klebeneigung, problemlose Verarbeitbarkeit (Spritzbarkeit) und gute Beständigkeit gegen Öl und thermischen Einflüsse aus. Sie besitzen im allgemeinen Mooney-Viskositäten (gemessen nach DIN 53 523) von 20 bis 60, vorzugsweise 20 bis 50 (ML-4/100°C).

Die erfindungsgemäßen Terpolymerisate können peroxidisch und gegebenenfalls über funktionelle Gruppen wie $-CO_2H$, -OH oder Epoxide aminisch vernetzt oder über Metallionen ionisch vernetzt werden.

Die erfindungsgemäßen Terpolymerisate können in nicht vulkanisiertem oder in vulkanisiertem Zustand verwendet werden. Bevorzugte Beispiele für die Verwendung in nicht vulkanisiertem Zustand sind die Verwendung als Fließverbesserer für Schmiermittel und Hydrauliköle (wie z.B. Mitteldestillate nach DIN 7728 T1), als Klebstoffbindemittel, insbesondere für Schmelzkleber, und als (weichmachende) Mischungskomponente für Thermoplaste, Duroplaste und Kautschuke. Insbesondere die erfindungsgemäßen Terpolymerisate mit Vinylestergehalten von über 75 Gew.-% können als Mischungskomponenten für andere Thermoplaste, z.B. für Polyolefine oder Polyurethane, dienen.

Bei der Vulkanisation zeigen die erfindungsgemäßen Terpolymerisate geringe Blasenbildung und bessere Entformbarkeit in der Wärme als die Produkte des Standes der Technik. Die Vulkanisate zeichnen

sich durch eine höhere Zugfestigkeit und Bruchdehnung sowie günstigere Spannungswerte aus. Insbesondere Terpolymerisate mit einem Vinylestergehalt von 75 bis 98 Gew.-% eignen sich zur Herstellung von besonders flammwidrigen und ölbeständigen Artikeln. Sie können zur Herstellung von Überzügen, z.B. auf Kabeln, als Folien, Beschichtungsmaterial sowie zur Modifikation anderer Kunststoffe, beispielsweise Celluloseester oder Polyvinylchlorid, verwendet werden.

Die vulkanisierten erfindungsgemäßen Ethylen-Terpolymerisate können zur Herstellung von Formkörpern, Folien und Überzügen jeglicher Art verwendet werden, z.B. zur Herstellung von Dichtungen, Kabelaußenmänteln, Kabelleitlagen, Isolierungen, Transportbändern und Schläuchen.

Weiterer Gegenstand der Erfindung ist die Verwendung der erfindungsgemäßen Ethylen-Terpolymerisate zur Herstellung von nicht-vulkanisierten oder vulkanisierten Formkörpern.

"Vulkanisiert" im Sinne der Erfindung bedeutet, daß bei 10-stündiger Extraktion im Soxhlet-Aufsatz mit Toluol als Extraktionsmittel weniger als 3, vorzugsweise weniger als 1 Gew.-%, bezogen auf Terpolymerisat, extrahierbar ist.

## Beispiele

### Beispiel 1

Ethylen/Vinylacetat/Maleinsäure-2-cyano-ethylhalbester (MACE)-Copolymerisat

Eine Autoklavenkaskade, bestehend aus vier hintereinandergeschalteten Rührautoklaven von jeweils einem Fassungsvermögen von 5 l, wird kontinuierlich mit 720 g/h Ethylen, einem Gemisch A (1200 ml/h), bestehend aus 6000 g Vinylacetat (d = 0,79 g/mol), 9600 g tert.-Butanol, 394 g MACE und einer Initiatorlösung B (100 ml/h), bestehend aus 300 g Vinylacetat, 500 g tert.-Butanol und 8 g tert.-Butylperpivalat beschickt. Mischungen A und B sowie Ethylen werden über einen Prämix-Autoklaven in Autoklav 1 eingespeist. Der Massenstrom durchläuft alle Autoklaven. Die Reaktorinnentemperaturen betragen T 1 = 70 °C, T 2 = 73 °C, T 3 = 75 °C und T 4 = 85 °C. Der Betriebsdruck beträgt 300 bar. Nach Erreichen des Gleichgewichts werden aus den einzelnen Autoklaven über Schleusen Proben entnommen. Unverbrauchtes Ethylen wird vorsichtig entspannt und abgelassen. Die entgasten Proben enthalten Feststoffgehalte von 15 bis 48 Gew.-%. Die Mooney-Viskosität beträgt 22 ML 4/100 °C); (VA-Gehalt: 50,8 Gew.-%, Ethylen-Gehalt: 47,0 Gew.-% MACE-Gehalt (eingebaut) 2,2 Gew.-%).

Die mittlere Verweilzeit betrug 9 Stunden.

### Beispiel 2

Ethylen/Vinylacetat/Maleinsäure-2-cyano-ethylhalbester (MACE)/3-Methoxy-butylacrylat (MOBA)-Copolymerisat

Die Autoklavenkaskade aus Beispiel 1 wird kontinuierlich mit 458 g/h Ethylen, einem Gemisch A (1200 ml/h), bestehend aus 7800 g Vinylacetat, 9000 g tert.-Butanol, 900 g MOBA, 300 g MACE sowie einem Gemisch B (100 ml/h) bestehend aus 600 g Vinylacetat, 600 g tert.-Butanol und 9 g tert.-Butylperpivalat beschickt. Die Reaktorinnentemperaturen betragen T 1 = 64 °C, T 2 = 68 °C, T 3 = 73 °C, T 4 = 80 °C. In Autoklav 3 werden 150 g/h Ethylen nachdosiert. Die Feststoffgehalte liegen zwischen 5 und 40 Gew.-%, die Mooney-Viskosität beträgt 19 (ML-4/100 °C); (VA-Gehalt: 51 Gew.%, Ethylen-Gehalt: 27 Gew.-%, MOBA-Gehalt: 20 Gew.-% und MACE-Gehalt: 4 Gew.-%). Die mittlere Verweilzeit betrug 7 Stunden.

### Beispiel 3

Ethylen/Vinylacetat/Ethylacrylat-Copolymerisat

Die Autoklavenkaskade aus Beispiel 1 wird kontinierlich mit 458 g/h Ethylen, einem Gemisch A (2000 ml/h) bestehend aus 6,3 kg Vinylacetat (d = 0,79 g/$cm^3$), 9 kg tert.-Butanol und 2,7 kg Ethylacrylat (d = 0,923818 g/$cm^3$), einer Mischung B (120 ml/h), bestehend aus 0,6 kg Vinylacetat, 0,6 kg tert.-Butanol und 9 g tert.-Butylperpivalat beschickt.

Die Reaktorinnentemperaturen betragen T 1 = 64 °C, T 2 = 68 °C, T 3 = 73 °C, T 4 = 80 °C. Der Betriebsdruck beträgt 300 bar. Nach Erreichen des Gleichgewichtes werden aus den Autoklaven über Schleusen Proben gezogen. Unverbrauchtes Ethylen wird vorsichtig entspannt und abgelassen. Die entgasten Proben enthalten Feststoffgehalte von 7 bis 26 Gew.-%; die Mooney-Viskosität beträgt 20 (ML-4/100 °C). Die mittlere Verweilzeit betrug 6 Stunden.

Beispiel 4

Ethylen/Vinylacetat/Methylacrylat-Copolymerisat

Die Autoklavenkaskade aus Beispiel 1 wird kontinuierlich mit 900 g/h Ethylen, einem Gemisch A (2000 ml/h) bestehend aus 9 kg tert.-Butanol, 5 kg Vinylacetat und 4 kg Methylacrylat (d = 0,9558 g/$cm^3$) und einer Mischung B (120 ml/h) bestehend aus 0,6 kg Vinylacetat, 0,6 kg tert.-Butanol und 9 g tert.-Butylperpivalat beschickt.

Die Reaktorinnentemperaturen betragen T 1 = 63 °C, T 2 = 68 °C, T 3 = 74 °C und T 4 = 85 °C. Der Betriebsdruck beträgt 310 bar. Nach Erreichen des Gleichgewichtes werden aus den Autoklaven über Schleusen Proben gezogen. Unverbrauchtes Ethylen wird vorsichtig entspannt und abgelassen. Die entgasten Proben enthalten Feststoffgehalte von 4 bis 24 Gew.-%. Die Mooney-Viskosität beträgt 19 (ML-4/100 °C). Die mittlere Verweilzeit betrug 6 Stunden.

Beispiel 5

Ethylen/Vinylacetat/3-Methoxybutylacrylat (MOBA)-Copolymerisat

Die Autoklavenkaskade aus Beispiel 1 wird kontinierlich mit 458 g/h Ethylen, einem Gemisch A (2000 ml/h), bestehend aus 9000 g Vinylacetat (d = 0,79 g/ml), 9000 g tert.-Butanol und 800 g MOBA (d = 0,981 g/ml), einer Lösung B (120 ml/h), bestehend aus 600 g Vinylacetat und 600 g tert.-Butanol sowie einer Mischung C (100 ml/h), bestehend aus 300 g MOBA, 547 g tert.-Butanol und 6 g tert.-Butylperpivalat beschickt. Mischung C wird in Autoklav 3 zudosiert, alle anderen Monomeren bzw. Monomergemische (Mischung A, Lösung B, Ethylen) über den Prämixautoklaven in Autoklav 1.

Der Massenstrom durchläuft alle Autoklaven. Die Reaktorinnentemperaturen betragen T 1 = 64 °C, T 2 = 68 °C, T 3 = 73 °C und T 4 = 80 °C. Der Betriebsdruck beträgt 300 bar. Nach Erreichen des Gleichgewichts werden aus den einzelnen Autoklaven über Schleusen Proben entnommen. Unverbrauchtes Ethylen wird vorsichtig entspannt und abgelassen. Die entgasten Proben enthalten Feststoffgehalte von 15 bis 48 Gew.-%. Die Mooney-Viskosität beträgt 19 (ML-4/100 °C). Die mittlere Verweilzeit betrug 7 Stunden.

Beispiel 6

Ethylen/Vinylacetat/Acrylsäure-Co-polymerisat

Die Autoklavenkaskade aus Beispiel 1 wird kontinierlich mit 458 g/h Ethylen, einem Gemisch A (2000 ml/h), bestehend aus 9000 g Vinylacetat (d = 0,79 g/ml), 9000 g tert.-Butanol und 180 g Acrylsäure (d = 1,051 g/ml) und einer Initiatorlösung B (120 ml/h), bestehend aus 600 g Vinylacetat, 600 g tert.-Butanol sowie 9 g tert.-Butylperpivalat beschickt. Die Zudosierung der Monomeren bzw. Monomergemische (Mischung A, Initiatorlösung B, Ethylen) erfolgt über den Prämixautoklaven in Autoklav 1. Der Massenstrom durchläuft alle Autoklaven. Die Reaktorinnentemperaturen betragen T 1 = 67 °C, T 2 = 70 °C, T 3 = 73 °C und T 4 = 80 °C. Der Betriebsdruck beträgt 300 bar. Nach Erreichen des Gleichgewichts werden aus den einzelnen Autoklaven über Schleusen Proben entnommen. Unverbrauchtes Ethylen wird vorsichtig entspannt und abgelassen. Die entgasten Proben enthalten Feststoffgehalte von 15 bis 40 Gew.-%. Die Mooney-Viskosität beträgt 14 (ML-4/100 °C); (VA-Gehalt: 75 Gew.-%, Ethylen-Gehalt: 20 Gew.-%, Acrylsäure-Gehalt: 5 Gew.-%). Die mittlere Verweilzeit betrug 7 Stunden.

Beispiel 7

Ethylen/Vinylacetat/Glycidylmethacrylat-Copolymerisat

Die Autoklavenkaskade aus Beispiel 1 wird kontinuierlich mit 458 g/h Ethylen, einem Gemisch A (1200 ml/h), bestehend aus 6000 g Vinylacetat (d = 0,79 g/ml), 1000 g tert.-Butanol und 150 g Glycidylmethacrylat (d = 1.042 g/ml), einer Lösung B (100 ml/h), bestehend aus 300 g Vinylacetat und 500 g tert.-Butanol sowie einer Mischung C (100 ml/h), bestehend aus 150 g Glycidylmethacrylat, 657 g tert.-Butanol und 8 g tert.-Butylperpivalat beschickt. Mischung C wird in Autoklav 3 zudosiert, alle anderen Monomeren bzw. Monomergemische (Mischung A, Lösung B, Ethylen) über den Prämixautoklaven in Autoklav 1. Der

Massenstrom durchläuft alle Autoklaven. Die Reaktorinnentemperaturen betragen T 1 = 70 °C, T 2 = 73 °C, T 3 = 75 °C und T 4 = 85 °C. Der Betriebsdruck beträgt 300 bar. Nach Erreichen des Gleichgewichts werden aus den einzelnen Autoklaven über Schleusen Proben entnommen. Unverbrauchtes Ethylen wird vorsichtig entspannt und abgelassen. Die entgasten Proben enthalten Feststoffgehalte von 15 bis 30 Gew.-%. Die Mooney-Viskosität beträgt 14 (ML-4/100 °C); (Glycidylmethacrylat-Gehalt:8,5 Gew.-%).

Die mittlere Verweilzeit betrug 6 Stunden.

Beispiel 8

Ethylen/Vinylacetat/Kohlenmonoxid-Copolymerisat

Die Autoklavenkaskade aus Beispiel 1 wird kontinierlich mit 1000 g/h Ethylen, einer Mischung A (2000 ml/h) bestehend aus 5000 g Vinylacetat (d = 0,79 g/mol) und 5000 g tert.-Butanol sowie mit einer Initiatorlösung B (120 ml/h) bestehend aus 360 g Vinylacetat, 640 g tert.-Butanol und 12,0 g tert.-Butylperpivalat beschickt.

Der Massestrom durchläuft alle Autoklaven. Die Reaktorinnentemperaturen betragen T 1 = 70 °C, T 2 = 73 °C, T 3 = 77 °C, T 4 = 80 °C. Der Betriebsdruck wird auf 300 bar eingestellt.

Anschließend werden in den dritten Autoklaven 16 g/h Kohlenmonoxid eingespeist. Nach Erreichen des Gleichgewichtes werden aus den einzelnen Reaktoren über Schleusen Proben gezogen. Unverbrauchtes Ethylen und Kohlenmonoxid werden vorsichtig entspannt und abgelassen. Die entgasten Proben enthalten Feststoffgehalte von 2 bis 18 Gew.-%. Die Mooney-Viskosität beträgt 15 (ML-4/100 °C); (VA-Gehalt: 65 Gew.-%, CO-Gehalt: 5 Mol-%).

Die mittlere Verweilzeit betrug 7 Stunden.

## Patentansprüche

1. Kontinuierliches Verfahren zur Herstellung von Ethylen-Terpolymerisaten mit einem Gelgehalt von nicht mehr als 0,2 Gew.-%, bezogen auf das Terpolymerisat, und mit einem als Gewichtsmittel bestimmten Molekulargewicht $\overline{M}_w$, von 50.000 bis 1.500.000 enthaltend
   a) 1 bis 59 Gew.-% copolymerisiertes Ethylen,
   b) 40 bis (99-c) Gew.-% copolymerisierte Einheiten mindestens eines Vinylesters der Formel

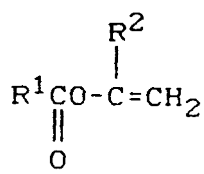

   worin
   $R^1$ $C_1$-$C_6$-Alkyl und
   $R^2$ Wasserstoff; $C_1$-$C_6$-Alkyl, das durch -CN, -SCN oder Halogen (Fluor, Chlor, Brom) substituiert sein kann,
   bedeuten, und
   c) 1 bis 59 Gew.-% copolymerisierte Einheiten mindestens eines Monomeren der Formeln
   CO,

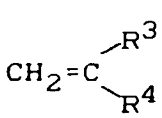

und / oder

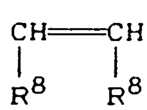

   worin
   $R^3$ Wasserstoff, $C_1$-$C_6$-Alkyl, -CN oder Halogen (Fluor, Chlor, Brom), $-COOR^5$,
   $R^4$ -COOH, $-CONH_2$, $-COOCH_2OH$,

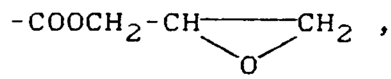

$-COOCH_2CH=CH_2$, $-COOCH_2CH_2Cl$,
$-CONHCH=CH_2$, $-COOCO-C(CH_3)=CH_2$,
$-COOR^5$, -CN oder Halogen (Fluor, Chlor, Brom),

$R^5$ $[R^6O]_n R^7$,

$R^6$ $C_1$-$C_6$-Alkylen,

$R^7$ Wasserstoff, $C_1$-$C_6$-Alkyl, -CN, $-OR^9$, $-COR^9$ oder Halogen (Fluor, Chlor, Brom),

$R^8$ $-CO_2R^5$, -CN oder Halogen (Fluor, Brom, Chlor) oder beide $R^8$-Substituenten zusammen -CO-O-CO-, -CO-NH-CO- oder $>(CO)_2$-N-$C_1$-$C_6$-Alkyl,

$R^9$ Wasserstoff oder $C_1$-$C_6$-Alkyl und

n eine ganze Zahl von 1 bis 10 bedeuten,

wobei sich die Prozentangaben jeweils auf die Summe der Komponenten (a + b + c) beziehen, in Lösung, dadurch gekennzeichnet, daß man die Reaktion

- in einer Kaskade aus 3 bis 10 Reaktoren,
- in einem polaren organischen Lösungsmittel bei einer Lösungsmittelkonzentration, bezogen auf die Summe (Monomere + Lösungsmittel), von über 20 bis 75 Gew.-%,
- unter Drucken von 100 bis 1.000 bar,
- bei Temperaturen von 30 bis 150 °C,
- in Gegenwart von 0,02 bis 1,5 Gew.-%, bezogen auf eingesetzte Monomere, Polymerisationsinitiator,
- bis zu einem Umsatz, bezogen auf Vinylester b), von 40 bis 90 Gew.-% durchführt.

**2.** Verfahren nach Anspruch 1, dadurch gekennzeichnet, daß man die Polymerisation in Gegenwart von 50 ppm bis 1 Gew.-%, bezogen auf eingesetzte polymerisierbare Monomere, (Meth-)Acryloylverbindungen mit mindestens 2 Acryloyl- oder Methacryloylgruppen pro Molekül durchführt.

**3.** Verfahren nach Ansprüchen 1 und 2 in Gegenwart von 200 ppm bis 1 Gew.-% (Meth-)Acryloylverbindung mit mindestens 2 Acryloyl- oder Methacryloylgruppen pro Molekül.

**4.** Verfahren nach Ansprüchen 1 bis 3, wonach als (Meth-)Acryloylverbindung Acrylsäureanhydrid oder Methacrylsäureanhydrid ausgewählt wird.

**5.** Ethylen-Terpolymerisate mit einem Gelgehalt von nicht mehr als 0,2 Gew.-%, bezogen auf das Terpolymerisat, und mit einem als Gewichtsmittel bestimmten Molekulargewicht von 50.000 bis 1.500.000 enthaltend

a) 1 bis 59 Gew.-% copolymerisiertes Ethylen,

b) 40 bis (99-c) Gew.-% copolymerisierte Einheiten mindestens eines Vinylesters der Formel

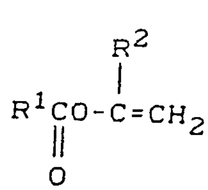

und

c) 1 bis 59 Gew.-% copolymerisierte Einheiten mindestens eines Monomeren der Formeln

CO,

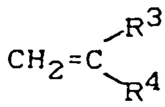 und/oder 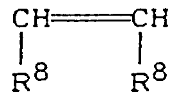

wobei die Substituenten $R^1$ bis $R^9$ die in Anspruch 1 angegebene Bedeutung besitzen, erhältlich durch das Verfahren gemäß Anspruch 1.

**6.** Terpolymerisate nach Anspruch 5 mit einem Gehalt von 50 ppm bis 1 Gew.-% an copolymerisierter (Meth-)Acryloylverbindung mit mindestens 2 Acryloyl- oder Methacryloylgruppen pro Molekül.

**7.** Verwendung der Terpolymerisate nach Ansprüchen 5 und 6 zur Herstellung von Formkörpern.

**8.** Verwendung der Terpolymerisate nach Ansprüchen 5 und 6 zur Herstellung von Vulkanisaten.

## Claims

**1.** A continuous process for the preparation of ethylene terpolymers having a gel content of not more than 0.2% by weight, based on the terpolymer, and a molecular weight Mw determined as weight average of from 50,000 to 1,500,000, containing

a) from 1 to 59% by weight of copolymerised ethylene,

b) from 40 to (99-c)% by weight of copolymerised units of at least one vinyl ester corresponding to the formula

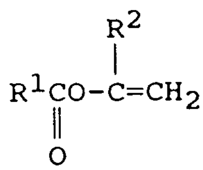

wherein

$R^1$ denotes $C_1$-$C_6$-alkyl and

$R^2$ denotes hydrogen or a $C_1$-$C_6$-alkyl which may be substituted by CN, SCN or halogen (fluorine, chlorine, bromine), and

c) from 1 to 59% by weight of copolymerised units of at least one monomer corresponding to one of the following formulae:

CO,

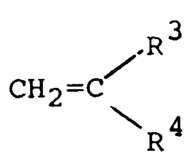 and/or 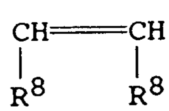

wherein

$R^3$ stands for hydrogen, $C_1$-$C_6$-alkyl, -CN or halogen (fluorine, chlorine, bromine) or $COOR^5$,

$R^4$ stands for COOH, $CONH_2$, $COOCH_2OH$,

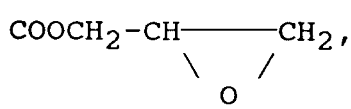

$COOCH_2CH=CH_2$, $COOCH_2CH_2Cl$,

$CONHCH=CH_2$, $COOCO\text{-}C(CH_3)=CH_2$,

$COOR^5$, CN or halogen (fluorine, chlorine, bromine),

$R^5$ stands for $[R^6O]_n R^7$,

$R^6$ stands for $C_1$-$C_6$-alkylene,

$R^7$ stands for hydrogen, $C_1$-$C_6$-alkyl, CN, $OR^9$, $COR^9$ or halogen (fluorine, chlorine, bromine),

$R^8$ stands for $CO_2R^5$, CN or halogen (fluorine, bromine, chlorine) or the two $R^8$ substituents together stand for CO-O-CO, CO-NH-CO or $>(CO)_2$-N-$C_1$-$C_6$-alkyl,

$R^9$ stands for hydrogen or $C_1$-$C_6$-alkyl and

n denotes an integer from 1 to 10,

in solution, the percentages being based in each case on the sum of the components (a + b + c), characterised in that the reaction is carried out

- in a cascade of 3 to 10 reactors,
- in a polar organic solvent at a solvent concentration, based on the sum of (monomers + solvent) of above 20 to 75% by weight,
- under pressures of from 100 to 1000 bar,
- at temperatures of from 30 to 150 °C,
- in the presence of from 0.02 to 1.5% by weight, based on the monomers put into the process, of polymerisation initiator,
- until a conversion of from 40 to 90% by weight, based on vinyl ester b), is obtained.

2. The process according to Claim 1, characterised in that polymerisation is carried out in the presence of from 50 ppm to 1% by weight, based on the polymerisable monomers used, of (meth)acryloyl compounds having at least 2 acryloyl or methacryloyl groups per molecule.

3. The process according to Claims 1 and 2 in the presence of from 200 ppm to 1% by weight of (meth)-acryloyl compound containing at least 2 acryloyl or methacryloyl groups per molecule.

4. The process according to Claims 1 to 3 in which the (meth)acryloyl compound chosen is acrylic acid anhydride or methacrylic acid anhydride.

5. Ethylene terpolymers having a gel content of not more than 0.2% by weight, based on the terpolymer and a molecular weight determined as weight average of from 50,000 to 1,500,000, containing

a) from 1 to 59% by weight of copolymerised ethylene,

b) from 40 to (99-c)% by weight of copolymerised units of at least one vinyl ester corresponding to the formula

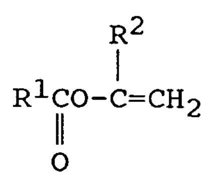

and

c) from 1 to 59% by weight of copolymerised units of at least one monomer corresponding to the formula

CO,

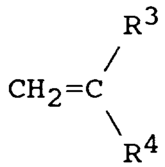 and/or 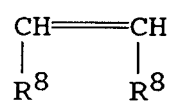 ,

the substituents $R^1$ to $R^9$ having the meanings indicated in Claim 1, obtainable by the process according to Claim 1.

6. Terpolymers according to Claim 5 containing from 50 ppm to 1% by weight of copolymerised (meth)-acryloyl compound having at least 2 acryloyl or methacryloyl groups per molecule.

7. Use of the terpolymers according to Claims 5 and 6 for the production of mouldings.

8. Use of the terpolymers according to Claims 5 and 6 for the production of vulcanisates.

**Revendications**

1. Procédé continu de production de terpolymères d'éthylène ayant une teneur en gel ne dépassant pas 0,2 % en poids, par rapport au terpolymère, et un poids moléculaire $\overline{M}_p$, déterminé comme moyenne pondérale, de 50 000 à 1 500 000, contenant
   a) 1 à 59 % en poids d'éthylène copolymérisé,
   b) 40 à (99-c) % en poids de motifs copolymérisés d'au moins un ester vinylique de formule

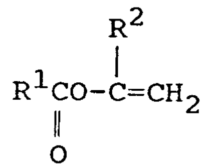

   dans laquelle
   $R^1$ est un groupe alkyle en $C_1$ à $C_6$ et
   $R^2$ représente l'hydrogène ; un groupe alkyle en $C_1$ à $C_6$ qui peut être substitué par un groupe -CN, -SCN ou un halogène (fluor, chlore, brome),
   et
   c) 1 à 59 % en poids de motifs copolymérisés d'au moins un monomère de formules
   CO,

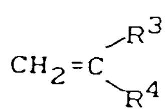 et/ou 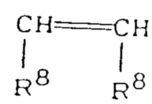

   dans lesquelles
   $R^3$ représente l'hydrogène, un groupe alkyle en $C_1$ à $C_6$, -CN ou un halogène (fluor, chlore, brome), un groupe $-COOR^5$,
   $R^4$ est un groupe
   $-COOH$, $-CONH_2$, $-COOCH_2OH$,

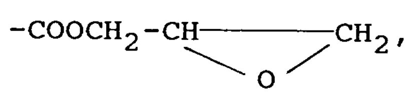

   $-COOCH_2CH=CH_2$, $-COOCH_2CH_2Cl$,
   $-CONHCH=CH_2$, $-COOCO-C(CH_3)=CH_2$,
   $-COOR^5$, -CN ou un halogène (fluor, chlore, brome),
   $R^5$ est un groupe $[R^6O]_n R^7$,
   $R^6$ est un groupe alkylène en $C_1$ à $C_6$,
   $R^7$ est l'hydrogène, un groupe alkyle en $C_1$ à $C_6$, -CN, $-OR^9$, $-COR^9$ ou un halogène (fluor, chlore, brome),
   $R^8$ est un groupe $-CO_2R^5$, -CN ou un halogène (fluor, chlore, brome) ou bien les deux substituants $R^8$ forment conjointement un groupe -CO-O-CO-, -CO-NH-CO- ou $>(CO)_2$-N-(alkyle en $C_1$ à $C_6$),

$R^9$ est l'hydrogène ou un groupe alkyle en $C_1$ à $C_6$ et

n est un nombre entier de 1 à 10,

les indications de pourcentage se rapportant dans chaque cas à la somme des composants (a + b + c), en solution, caractérisé en ce qu'on conduit la réaction

- dans une cascade de 3 à 10 réacteurs,
- dans un solvant organique polaire à une concentration en solvant, par rapport à la somme (monomères + solvant), de plus de 20 à 75 % en poids,
- sous des pressions de 100 à 1000 bars,
- à des températures de 30 à 150 °C,
- en présence de 0,02 à 1,5 % en poids, par rapport aux monomères utilisés, d'initiateur de polymérisation,
- jusqu'à un degré de réaction, par rapport à l'ester vinylique b), de 40 à 90 % en poids.

**2.** Procédé suivant la revendication 1, caractérisé en ce qu'on conduit la polymérisation en présence de 50 ppm à 1 % en poids, par rapport aux monomères polymérisables utilisés, de composés de (méth)-acryloyle portant au moins deux groupes acryloyle ou méthacryloyle par molécule.

**3.** Procédé suivant les revendications 1 et 2 de mise en oeuvre en présence de 200 ppm à 1 % en poids de composé de (méth)acryloyle portant au moins deux groupes acryloyle ou méthacryloyle par molécule.

**4.** Procédé suivant les revendications 1 à 3, dans lequel on choisit comme composé de (méth)acryloyle l'anhydride d'acide acrylique ou l'anhydride d'acide méthacrylique.

**5.** Terpolymères d'éthylène ayant une teneur en gel ne dépassant pas 0,2 % en poids par rapport au terpolymère, et ayant un poids moléculaire, déterminé comme moyenne pondérale, de 50 000 à 1 500 000, contenant

a) 1 à 59 % en poids d'éthylène copolymérisé,

b) 40 à (99-c) % en poids de motifs copolymérisés d'au moins un ester vinylique de formule

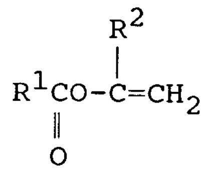

et

c) 1 à 59 % en poids de motifs copolymérisés d'au moins un monomère de formules

CO,

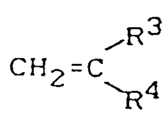

et/ou

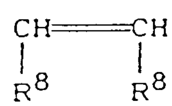

les substituants $R^1$ à $R^9$ ayant la définition indiquée dans la revendication 1, obtenus par le procédé suivant la revendication 1.

**6.** Terpolymères suivant la revendication 5, ayant une teneur de 50 ppm à 1 % en poids en composé de (méth)acryloyle copolymérisé ayant au moins deux groupes acryloyle ou méthacryloyle par molécule.

**7.** Utilisation des terpolymères suivant les revendications 5 et 6 pour la production de pièces façonnées.

**8.** Utilisation des terpolymères suivant les revendications 5 et 6 pour la production de vulcanisats.